# EUROPEAN PATENT APPLICATION

(11) **EP 4 726 086 A1**
(43) Date of publication of application: **15.04.2026**
(21) Application number: 25201555.7
(22) Date of filing: 11.09.2025
(51) Int. Cl.: D03J 1/00, G06T 7/00

(54) **OBSERVATION SYSTEM FOR LOOM**

(30) Priority: 08.10.2024 JP 2024176455
(71) Applicant: KABUSHIKI KAISHA TOYOTA JIDOSHOKKI, Kariya-shi, Aichi 448-8671 (JP)
(72) Inventor: MATSUOKA, Daisuke, Kariya-shi, Aichi, 448-8671 (JP)
(74) Representative: TBK

(57) **Abstract**

An observation system (100) for a loom (10) repeatedly performs a weaving operation including beating. The observation system (100) includes a plurality of cameras (31, 31a, 31b) configured to capture an image during each instance of the weaving operation; and a management device (41) configured to obtain a plurality pieces of captured image data (D) from the plurality of cameras (31, 31a, 31b). The plurality of cameras (31, 31a, 31b) each have a different target to be captured and a different image capturing timing during each instance of the weaving operation. The management device (41) performs an image association process to associate related pieces of captured image data (D), among the plurality of pieces of captured image data (D) from the plurality of cameras (31, 31a, 31b) having the different target to be captured and the different image capturing timing during each instance of the weaving operation.

## Description

### TECHNICAL FIELD

The present invention relates to an observation system for a loom.

Observation of a loom may be conducted using images captured by a camera that targets components or yarns of the loom for capturing images. For example, Japanese Patent Application Publication No. 2020-196972 discloses a shedding failure detection device for a loom that detects a warp shedding failure. The shedding failure detection device for the loom includes a camera that captures an image of a warp shed, and a control device that detects a shedding failure based on the image captured by the camera.

In the observation of the loom, it is required to grasp the relationship among a plurality of locations in the loom. For example, when an abnormality occurs in the components or the yarns of the loom, a cause of the abnormality and its effect need to be grasped.

### SUMMARY

In accordance with an aspect of the present invention , there is provided an observation system for a loom that repeatedly performs a weaving operation including beating. The observation system includes a plurality of cameras configured to capture an image during each instance of the weaving operation; and a management device configured to obtain a plurality pieces of captured image data from the plurality of cameras. The plurality of cameras each have a different target to be captured and a different image capturing timing during each instance of the weaving operation. The management device performs an image association process to associate related pieces of captured image data, among the plurality of pieces of captured image data from the plurality of cameras having the different target to be captured and the different image capturing timing during each instance of the weaving operation.

Other aspects and advantages of the invention will become apparent from the following description, taken in conjunction with the accompanying drawings, illustrating by way of example the principles of the invention .

### BRIEF DESCRIPTION OF THE DRAWINGS

The invention, together with objects and advantages thereof, may best be understood by reference to the following description of the embodiments together with the accompanying drawings in which:
FIG. 1 is a schematic plan view of a loom;
FIG. 2 is a perspective view of the loom;
FIG. 3 is a block diagram illustrating a configuration of an observation system for the loom;
FIG. 4 is a timing chart showing an external input signal, a first trigger signal, and a second trigger signal;
FIG. 5 is a table showing an example of an image association process;
FIG. 6 is a view showing a structure of captured image data;
FIG. 7 is a schematic view of associated captured image data;
FIG. 8 is a schematic view of associated captured image data according to a modification;
FIG. 9 is a schematic plan view of a loom according to a modification;
FIG. 10 is a schematic plan view of a loom according to a modification;
FIG. 11 is a schematic plan view of a loom according to a modification; and
FIG. 12 is a view of an example of an image association process according to a modification.

### DETAILED DESCRIPTION OF THE EMBODIMENTS

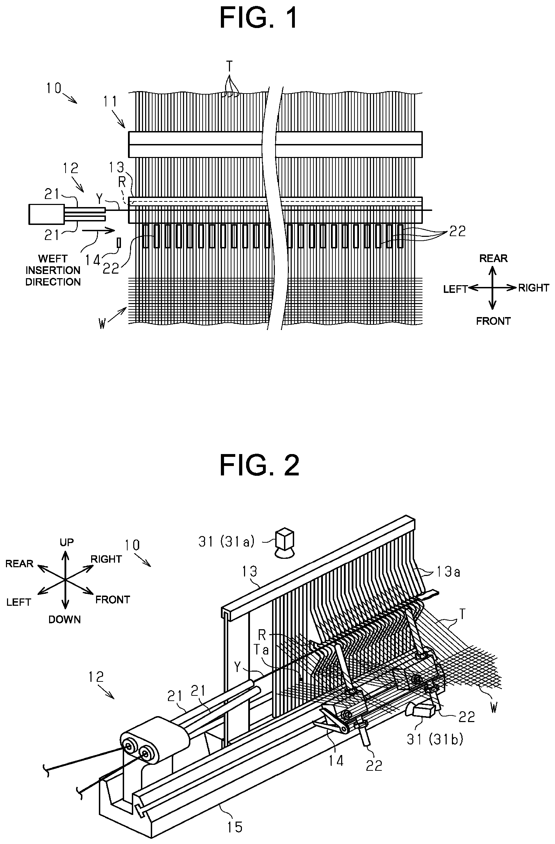

Hereinafter, an embodiment of an observation system 100 for a loom 10 will be described with reference to FIGS. 1 to 7. The loom 10 of the present embodiment is an airjet loom.

### Loom

As illustrated in FIGS. 1 and 2, a plurality of warp yarns T is arranged in a left-right direction of the loom 10. The warp yarns T each extend in a front-rear direction of the loom 10. The warp yarns T are drawn from a supply roll (not illustrated) provided at a rear of the loom 10. After being woven into a woven cloth W, the warp yarns T are wound by a winding roll (not illustrated) provided at a front of the loom 10. The warp yarns T move from the rear to the front in the front-rear direction of the loom 10.

The loom 10 includes a warp shedding device 11, a weft insertion device 12, a reed 13, and a cutting member 14. The warp shedding device 11 causes the warp yarns T to form a shed. The weft insertion device 12 inserts a weft yarn Y into a shed Ta formed by the warp yarns T. A direction in which the weft yarn Y is inserted is referred to as a weft insertion direction. The weft insertion direction is a direction from the left to the right in the right-left direction of the loom 10. The reed 13 beats the inserted weft yarn Y. The cutting member 14 cuts the inserted weft yarn Y.

The weft insertion device 12 includes main nozzles 21 and a plurality of sub-nozzles 22. The main nozzles 21 are disposed at the left end of the loom 10. The main nozzles 21 of the present embodiment eject air to discharge the weft yarn Y. The weft insertion device 12 of the present embodiment has two main nozzles 21. In the present embodiment, the weft yarn Y is alternately discharged from the two main nozzles 21.

The sub-nozzles 22 are disposed in front of the warp shedding device 11 in the front-rear direction of the loom 10. The sub-nozzles 22 are arranged downstream of the main nozzles 21 in the weft insertion direction. The sub-nozzles 22 are arranged in the right-left direction of the loom 10. The sub-nozzles 22 eject air onto the weft yarn Y inserted into the shed Ta of the warp yarns T.

The reed 13 is disposed between the warp shedding device 11 and the sub-nozzles 22 in the front-rear direction of the loom 10. The reed 13 is disposed downstream of the main nozzles 21 in the weft insertion direction. The reed 13 includes a plurality of reed dents 13a. The reed dents 13a are arranged in the right-left direction of the loom 10. The warp yarns T pass through gaps between the reed dents 13a adjacent to each other in the right-left direction of the loom 10. A weft travel passage R is formed in the reed 13. When the weft yarn Y is inserted, the weft travel passage R is positioned within the shed Ta formed by the warp yarns T. The weft yarn Y inserted into the shed Ta formed by the warp yarns T travels through the weft travel passage R.

The two main nozzles 21, the sub-nozzles 22, and the reed 13 each are fixed to the sley 15. The sley 15 moves back and forth in the front-rear direction of the loom 10. Thus, the two main nozzles 21, the sub-nozzles 22, and the reed 13 move back and forth with the sley 15 in the front-rear direction of the loom 10. The reed 13 beats the weft yarn Y inserted into the shed Ta formed by the warp yarns T by moving forward in the loom 10.

The cutting member 14 is positioned in front of the reed 13 in the front-rear direction of the loom 10. The cutting member 14 is positioned downstream of the main nozzles 21 and upstream of the sub-nozzles 22 in the weft insertion direction. When the reed 13 beats the weft yarn Y, the cutting member 14 cuts the weft yarn Y.

A weaving operation of the loom 10 includes shedding of the warp yarns T by the warp shedding device 11, and weft insertion of the weft yarn Y by the weft insertion device 12, and beating by the reed 13. The loom 10 repeatedly performs the weaving operation while moving the warp yarns T from the rear to the front in the front-rear direction of the loom 10. An operation from a start of beating to a start of the subsequent beating corresponds to one instance of the weaving operation.

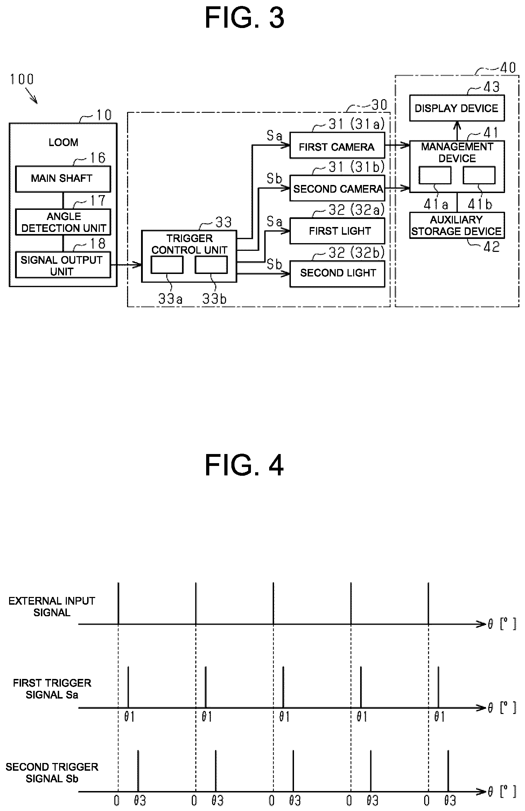

As illustrated in FIG. 3, the loom 10 includes a main shaft 16. The main shaft 16 is driven to rotate by a motor (not illustrated). In the present embodiment, the reed 13 starts beating the weft yarn Y when the rotation angle θ of the main shaft 16 is 0 degrees. Therefore, the rotation angle θ of the main shaft 16 from 0 degrees to 360 degrees (i.e., the next 0 degrees) corresponds to one instance of the weaving operation. When the rotation angle θ of the main shaft 16 is the first angle θ1, the cutting member 14 cuts the weft yarn Y. When the rotation angle θ of the main shaft 16 is a second angle θ2 that is greater than the first angle θ1, the weft yarn Y is discharged from one of the main nozzles 21.

As described above, in the present embodiment, the weft yarn Y is alternately discharged from the two main nozzles 21. Therefore, when the rotation angle θ of the main shaft 16 is at the second angle θ2, the weft yarn Y is discharged from one of the main nozzles 21, and when the rotation angle θ of the main shaft 16 next reaches the second angle θ2, the weft yarn Y is discharged from the other of the main nozzles 21.

The loom 10 includes an angle detection unit 17 and a signal output unit 18. The angle detection unit 17 is, for example, a rotary encoder. The angle detection unit 17 detects the rotation angle θ of the main shaft 16. The angle detection unit 17 is connected to the signal output unit 18. The angle detection unit 17 outputs the detected rotation angle θ of the main shaft 16 to the signal output unit 18. The signal output unit 18 outputs a signal to a trigger control unit 33, which will be described later, each time the rotation angle θ of the main shaft 16 detected by the angle detection unit 17 reaches a preset reference angle. In the present embodiment, the signal output unit 18 outputs a signal to the trigger control unit 33 each time the rotation angle θ of the main shaft 16 detected by the angle detection unit 17 reaches 0 degrees.

### Observation System 100 of loom 10

The observation system 100 of the loom 10 includes an image capture device 30 and an observation device 40.

The image capture device 30 includes a plurality of cameras 31, lights 32, the number of which is equal to the number of cameras 31, and the trigger control unit 33. The cameras 31 of the present embodiment include a first camera 31a and a second camera 31b. The lights 32 of the present embodiment include a first light 32a and a second light 32b.

The cameras 31 each are a digital camera. The cameras 31 each include an imaging element. Examples of the imaging element include a CCD image sensor (Charge Coupled Device image sensor) and a CMOS image sensor (Complementary Metal Oxide Semiconductor image sensor). The cameras 31 are disposed to be able to capture a target to be captured.

The lights 32 each are, for example, an LED light. The lights 32 are disposed to illuminate targets to be captured by the cameras 31. In the present embodiment, the first light 32a is disposed to illuminate a target to be captured by the first camera 31a. The second light 32b is disposed to illuminate a target to be captured by the second camera 31b.

Although not illustrated, the cameras 31 and the lights 32 of the present embodiment are attached to the loom 10. A method and positions for attaching the cameras 31 and the lights 32 to the loom 10 are determined appropriately according to the targets to be captured. The cameras 31 and the lights 32 may be directly attached to the loom 10 or attached via a magnetic arm or a bracket to the loom 10. The cameras 31 and the lights 32 may be fixed in a non-detachable manner to the loom 10 or may be attached in a detachable manner to the loom 10. For example, the cameras 31 and the lights 32 may be attached to a side frame, a cover, or the like of the loom 10, which is not illustrated.

For example, the cameras 31 and the lights 32 may be attached to the loom 10 as follows. The cameras 31 and the lights 32 are attached to a bracket. The bracket is attached to a frame by a bolt that passes through the bracket and is screwed into an eye bolt hole provided in the frame of the loom 10. Accordingly, the cameras 31 and the lights 32 are attached to the frame of the loom 10 via the bracket. The eye bolt hole is a hole into which an eye bolt for transporting the loom 10 is screwed. When the loom 10 is not being transported, the eye bolt is not screwed into the eye bolt hole, so that the eye bolt hole can be used as a hole for attaching the cameras 31 and the lights 32 to the loom 10 via the bracket.

The cameras 31 and the lights 32 may be attached to a stand placed on the floor surface of the factory where the loom is placed without being directly or indirectly attached to the loom 10.

The trigger control unit 33 includes a processor 33a and a main storage unit 33b. For example, a CPU (Central Processing Unit), a GPU (Graphics Processing Unit), or a DSP (Digital Signal Processor) is used as the processor 33a. The main storage unit 33b includes a RAM (Random Access Memory) and a ROM (Read Only Memory). The main storage unit 33b stores program codes or instructions configured to cause the processor 33a to execute processing. The main storage unit 33b, i.e., a computer-readable medium, includes any available medium accessible by a general purpose or dedicated computer. The trigger control unit 33 may be configured by using a hardware circuit such as an ASIC (Application Specific Integrated Circuit) or an FPGA (Field Programmable Gate Array). The trigger control unit 33, which is a processing circuit, may include one or more processors operating in accordance with computer programs, one or more hardware circuits such as an ASIC or a FPGA, or a combination thereof.

The trigger control unit 33 is connected to the cameras 31 and the lights 32. In other words, the trigger control unit 33 controls image capturing timings of the cameras 31 and light emission timings of the lights 32. The trigger control unit 33 is connected to the signal output unit 18 of the loom 10. A signal output by the signal output unit 18 is input to the trigger control unit 33 as an external input signal. With the external input signal, the trigger control unit 33 recognizes that the rotation angle θ of the main shaft 16 is at the reference angle, which is 0 degrees in the present embodiment. The trigger control unit 33 outputs a trigger signal simultaneously to the cameras 31 and their corresponding lights 32 each time the rotation angle θ of the main shaft 16 reaches the predetermined angle set in advance.

The cameras 31 each capture an image when the trigger signal is input from the trigger control unit 33. The lights 32 emit light when the trigger signal is input from the trigger control unit 33. Therefore, the cameras 31 respectively capture images during each instance of the weaving operation. The lights 32 emit light simultaneously when their corresponding cameras 31 capture images during each instance of the weaving operation.

The targets to be captured by the plurality of cameras 31 are different from each other. That is, the target to be captured by the second camera 31b is different from the target to be captured by the first camera 31a. The target to be captured by the first camera 31a in the present embodiment is the cutting member 14. The target to be captured by the second camera 31b in the present embodiment is tips of the main nozzles 21.

As illustrated in FIG. 2, the first camera 31a is disposed above the cutting member 14. The first camera 31a is disposed to capture an image below. The second camera 31b is disposed downstream of the main nozzles 21 in the weft insertion direction. The second camera 31b is positioned in front of the main nozzles 21 in the front-rear direction of the loom 10. The second camera 31b is disposed to capture an image on an upstream side in the weft insertion direction and on the rear side in the front-rear direction of the loom 10. Although not illustrated in FIG. 2, the first light 32a is disposed to illuminate the cutting member 14. The second light 32b is disposed to illuminate the tips of the main nozzles 21.

The image capturing timings when the cameras 31 capture images during each instance of the weaving operation are different among the cameras 31. That is, the image capturing timing of the second camera 31b is different from that of the first camera 31a during each instance of the weaving operation.

As shown in FIG. 4, the trigger control unit 33 of the present embodiment outputs a first trigger signal Sa to the first camera 31a and the first light 32a each time the rotation angle θ of the main shaft 16 reaches the first angle θ1. As a result, during each instance of the weaving operation, the first camera 31a captures an image at the timing when the cutting member 14 cuts the weft yarn Y, and the first light 32a emits light. Thus, the first camera 31a captures an image of the cutting member 14 at the timing when the cutting member 14 cuts the inserted weft yarn Y.

The trigger control unit 33 of the present embodiment outputs a second trigger signal Sb to the second camera 31b and the second light 32b each time the rotation angle θ of the main shaft 16 reaches a third angle θ3. The third angle θ3 is an angle immediately before the weft yarn Y is discharged from one of the main nozzles 21. Specifically, the third angle θ3 is set to be slightly smaller than the second angle θ2. As a result, during each instance of the weaving operation, the second camera 31b captures an image at the timing immediately before the weft yarn Y is discharged from one of the main nozzles 21, and the second light 32b emits light. Thus, the second camera 31b captures the tips of the main nozzles 21 at the timing before the weft yarn Y is discharged from one of the main nozzles 21.

As illustrated in FIG. 3, the observation device 40 includes a management device 41, an auxiliary storage device 42, and a display device 43.

The management device 41 of the present embodiment is formed of a computer. The management device 41 has a processor 41a and a main storage unit 41b. As the processor 41a, for example, a CPU, a GPU, or a DSP may be used. The main storage unit 41b includes a RAM and a ROM. The main storage unit 41b stores program codes or instructions configured to cause the processor 41a to execute processing. The main storage unit 41b, i.e., the computer-readable medium, includes any available medium accessible by a general-purpose or dedicated computer. The management device 41 may include a hardware circuit such as an ASIC or a FPGA. The management device 41, which is a processing circuit, may include one or more processors operating in accordance with computer programs, one or more hardware circuits such as an ASIC or a FPGA, or a combination thereof.

The auxiliary storage device 42 is a rewritable non-volatile storage device. The auxiliary storage device 42 is, for example, a hard disk drive or a solid-state drive. The display device 43 is a display.

The management device 41 is connected to the cameras 31. In the present embodiment, the management device 41 is connected to the first camera 31a and the second camera 31b. The management device 41 obtains captured image data D from the cameras 31. As described above, the cameras 31 capture images during each instance of the weaving operation. Therefore, the management device 41 obtains a plurality of pieces of the captured image data D from the cameras 31.

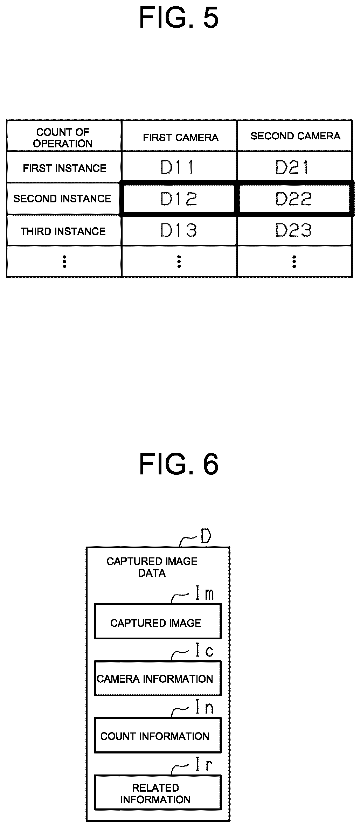

As shown in FIG. 5, the management device 41 of the present embodiment obtains a plurality of pieces of captured image data D11, D12, D13, and so on from the first camera 31a and a plurality of captured image data D21, D22, D23, and so on from the second camera 31b.

As illustrated in FIG. 6, each of the pieces of the captured image data D includes a captured image Im, camera information Ic indicating one of the cameras 31 that has captured the captured image Im, and count information In indicating the serial number of the weaving operation during which the captured image Im has been captured. Each of the pieces of the captured image data D may include time information indicating the time when the captured image Im has been captured instead of count information In. At a stage where the management device 41 has obtained the captured image data D from the cameras 31, the captured image data D does not include related information Ir, which will be described later.

The management device 41 performs an image association process to associate related pieces of the captured image data D, among the pieces of the captured image data D from the cameras 31, each of which has a different target to be captured and a different image capturing timing during each instance of the weaving operation. As described above, in the present embodiment, the target to be captured and the image capturing timing during each instance of the weaving operation of the second camera 31b differ from those of the first camera 31a. Therefore, the management device 41 of the present embodiment associates a piece of the captured image data D1 from the first camera 31a with a piece of the captured image data D2 from the second camera 31b, which are mutually related, among the pieces of the captured image data D1 from the first camera 31a and the pieces of the captured image data D2 from the second camera 31b in the image association process.

In the present embodiment, the management device 41 associates first related data Da, which is one of the pieces of the captured image data D1 from the first camera 31a, with second related data Db, which is one of the pieces of the captured image data D2 from the second camera 31b. In the present embodiment, the second related data Db is a piece of the captured image data D2, which is captured during the same instance of the weaving operation as an instance in which the first related data Da is captured, among the pieces of the image data D2 captured by the second cameras 31b.

As shown in FIG. 5, for example, if the captured image data D12 from the first camera 31a is captured during the second instance of the weaving operation is the first related data Da, the captured image data D22 from the second camera 31b captured during the second instance of the weaving operation is the second related data Db.

As illustrated in FIG. 6, the management device 41 adds related information Ir to each of related pieces of the captured image data D, the related information Ir indicating pieces of the captured image data D related to the piece of the captured image data D. Specifically, the management device 41 adds the related information Ir indicating that pieces of the captured image data D related to the first related data Da are the second related data Db, to the first related data Da. The management device 41 adds the related information Ir indicating that pieces of the captured image data D related to the second related data Db are the first related data Da, to the second related data Db. The management device 41 stores the captured image data D to which the related information Ir has been added in the auxiliary storage device 42.

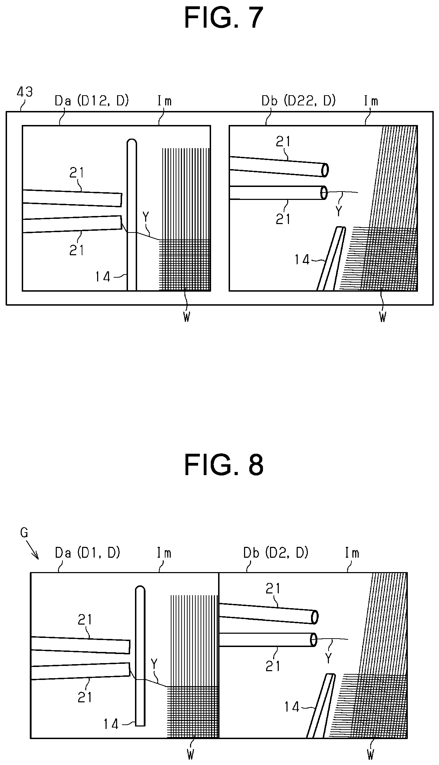

As illustrated in FIG. 7, the management device 41 causes the display device 43 to display the captured images Im of the associated pieces of the captured image data D based on the related information Ir added to the captured image data D. The management device 41 causes the display device 43 to display the captured images Im of the first related data Da and the second related data Db. This allows an operator to check the captured images Im of the related captured image data D at once.

### Operation of embodiment

The following will describe operation of the present embodiment.

The first camera 31a captures an image of the cutting member 14 at the timing when the inserted weft yarn Y is cut by the cutting member 14 during each instance of the weaving operation. The second camera 31b captures an image of the tip of one of the main nozzles 21 at the timing immediately before the weft yarn Y is discharged from the one of the main nozzles 21 during each instance of the weaving operation. The management device 41 associates the first related data Da, which is one of the pieces of the captured image data D1 from the first camera 31a, with the second related data Db, which is one of the pieces of the captured image data D2 from the second camera 31b, captured during the same instance of the weaving operation in which the first related data Da is captured. That is, the captured image Im of the cutting member 14 at the time of cutting the weft yarn Y during the nth instance of the weaving operation and the captured image Im of the tip of one of the main nozzles 21 immediately before the discharge of the weft yarn Y during the nth instance of the weaving operation are associated.

As illustrated in FIG. 7, if the time of cutting the weft yarn Y by the cutting member 14 is delayed, an amount of the weft yarn Y projecting from the tip of one of the main nozzles 21 may increase. If the amount of the weft yarn Y projecting from the tip of one of the main nozzle 21 is large, the projecting weft yarn Y may interfere with the discharge of the weft yarn Y from the other of the main nozzles 21. In the present embodiment, the operator compares two associated captured images Im to check the relationship between the state of the cutting member 14 at the time of cutting the weft yarn Y during the nth instance of the weaving operation and the amount of the weft yarn Y projecting from the tip of one of the main nozzles 21 prior to the discharge of the weft yarn Y during the nth instance of the weaving operation. Specifically, when the amount of the weft yarn Y projecting from the tip of one of the main nozzles 21 is large, it is possible to determine whether the large amount of the projected weft yarn Y is caused by a delay in the timing of cutting the weft yarn Y by the cutting member 14.

### Effects of the present embodiment

The following will describe effects of the present embodiment.
(1) The observation system 100 for the loom 10 includes the plurality of cameras 31 capturing images during each instance of the weaving operation of the loom 10 and the management device 41 that obtains the captured image data D from the plurality of cameras 31. The targets to be captured and the image capturing timings of the plurality of cameras 31 during each instance of the weaving differ among the cameras 31. The management device 41 performs the image association process to associate the related pieces of the captured image data D, among the captured image data D from the plurality of cameras 31, each having a different target to be captured and a different image capturing timing during each instance of the weaving operation.

According to this configuration, since the plurality of cameras 31, each having a different target to be captured and a different image capturing timing during each instance of the weaving operation, is provided, a relationship among a plurality of locations in the loom 10 may be determined by comparing the plurality of the related pieces of the captured image data D. In addition, since the plurality of related pieces of the captured image data D is associated in advance, the relationship among the plurality of locations in the loom 10 may be more easily grasped.

(2) The plurality of cameras 31 includes the first camera 31a, and the second camera 31b having a target to be captured and an image capturing timing during each instance of the weaving operation that are different from those of the first camera 31a. The management device 41 associates the first related data Da, which is one of the pieces of the captured image data D1 from the first cameras 31a, with the second related data Db, which is one of the pieces of the captured image data D2 from the second camera 31b, captured during the same instance of the weaving operation as an instance in which the first related data Da is captured. According to this configuration, the relationship among the plurality of locations in the loom 10 during one instance of the weaving operation may be more easily grasped.

(3) The first camera 31a captures an image of the cutting member 14 at the timing when the inserted weft yarn Y is cut by the cutting member 14. The second camera 31b captures an image of the tip of one of the main nozzles 21 at the timing immediately before the weft yarn Y is discharged.

According to this configuration, it is possible to grasp the relationship between a state of the cutting member 14 at the time of cutting the weft yarn Y and the amount of the weft yarn Y projecting from the tip of one of the main nozzles 21 before the weft yarn Y is discharged, during the nth instance of the weaving operation. Thus, when the amount of the weft yarn Y projecting from the tip of one of the main nozzles 21 is large, it is possible to determine whether the large amount of the projected weft yarn Y is caused by a delay in the timing of cutting the weft yarn Y by the cutting member 14.

(4) The observation system 100 for the loom 10 includes the number of the lights 32 equal to the number of the cameras 31. The lights 32 illuminate the targets to be captured by the cameras 31. According to this configuration, since the captured image Im is brightened, the loom 10 can be more easily observed.

### Modifications

The above embodiment may be modified as follows. The above embodiment and the following modifications may be combined with each other as long as they do not technically contradict each other.

The number of the cameras 31 is not limited to two, and may be changed as appropriate as long as a plurality of cameras is provided. It is to be noted that the targets to be captured by the cameras 31 and the image capturing timings during each instance of the weaving operation differ among the plurality of cameras 31.

If the observation system 100 for the loom 10 includes three or more cameras 31, the management device 41 may associate three or more related pieces of the captured image data D from the three or more cameras 31.

The lights 32 of the image capture device 30 may be omitted.

The lights 32 each may illuminate the targets to be captured by the plurality of cameras 31. In this case, the number of the lights 32 does not have to be the same as the number of the cameras 31.

A trigger control unit 33 that outputs a first trigger signal Sa to the first camera 31a and the first light 32a, and a trigger control unit 33 that outputs a second trigger signal Sb to the second camera 31b and the second light 32b may be provided separately.

In the above embodiment, the management device 41 associates the plurality of related pieces of the captured image data D by adding the related information Ir to each of the plurality of related pieces of the captured image data D, but the method of associating the plurality of related pieces of the captured image data D may be changed as appropriate.

For example, the management device 41 may associate the plurality of related pieces of the captured image data D by storing the plurality of related pieces of the captured image data D in the same folder in the auxiliary storage device 42.

As illustrated in FIG. 8, the management device 41 may associate the plurality of related pieces of the captured image data D by creating a composite image G in which the captured images Im of the plurality of related pieces of the captured image data D are arranged side by side. The plurality of related pieces of the captured image data D is arranged horizontally in the example illustrated in FIG. 8, but may be arranged vertically.

The number of main nozzles 21 provided in the weft insertion device 12 may be changed as appropriate according to the type of the weft yarn Y. The number of the main nozzles 21 provided in the weft insertion device 12 may be one or three or more.

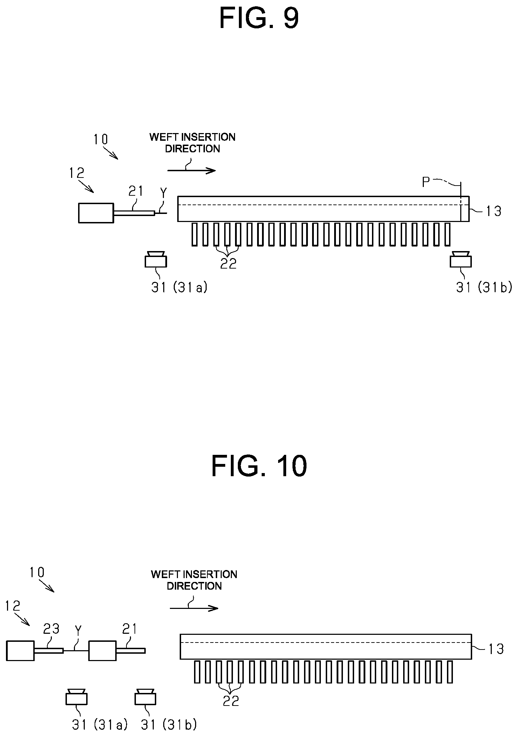

As illustrated in FIG. 9, the first camera 31a may capture an image of the tip of the weft yarn Y at a timing when the weft yarn Y is discharged from the main nozzle 21. The second camera 31b may capture an image of the weft yarn Y at a final arrival point P at a timing when a leading end of the weft yarn Y reaches the final arrival point P. The final arrival point P is set at a position downstream of the plurality of sub-nozzles 22 in the weft insertion direction. FIG. 9 illustrates the loom 10 at the timing when the weft yarn Y is discharged from the main nozzle 21.

The management device 41 associates the first related data Da, which is one of the pieces of the captured image data D1 from the first camera 31a, with the second related data Db, which is one of the pieces of the captured image data D2 from the second camera 31b, captured during the same instance of the weaving operation as an instance in which the first related data Da is captured.

In this modification, it is possible to grasp the relationship between the state of the leading end of the weft yarn Y when the weft yarn Y is discharged from the main nozzle 21 during the nth instance of the weaving operation, and the state of the weft yarn Y at the final arrival point P when the leading end of the weft yarn Y reaches the final arrival point P during the nth instance of the weaving operation.

Although not illustrated, the loom 10 may include a tensioning device. The tensioning device has a stretch nozzle that applies tension to the inserted weft yarn Y In this case, the second camera 31b may capture an image of a tip of the stretch nozzle along with the weft yarn Y at the final arrival point P at the timing when the leading end of the weft yarn Y reaches the final arrival point P. Thus, it is possible to grasp the relationship between the state of the leading end of the weft yarn Y when the weft yarn Y is discharged from the main nozzle 21 during the nth instance of the weaving operation, and a state of the stretch nozzle when the leading end of the weft yarn Y reaches the final arrival point P during the nth instance of the weaving operation.

As illustrated in FIG. 10, the weft insertion device 12 for the loom 10 may include a tandem nozzle 23. The tandem nozzle 23 is disposed upstream of the main nozzle 21 in the weft insertion direction. The tandem nozzle 23 draws out the weft yarn Y from a measuring drum (not illustrated) where the weft yarn Y is stored. The weft yarn Y drawn out by the tandem nozzle 23 is discharged from the main nozzle 21.

The first camera 31a captures an image of the weft yarn Y located between the tandem nozzle 23 and the main nozzle 21 at the timing before the weft yarn Y is discharged from the main nozzle 21. The second camera 31b captures an image of the leading end of the weft yarn Y at the timing when the weft yarn Y is discharged from the main nozzle 21. FIG. 10 illustrates the loom 10 at the timing before the weft yarn Y is discharged from the main nozzle 21.

The management device 41 associates the first related data Da, which is one of the pieces of the captured image data D1 from the first camera 31a, with the second related data Db, which is one of the pieces of the captured image data D2 from the second camera 31b, captured during the same instance of the weaving operation as an instance in which the first related data Da is captured.

In this modification, it is possible to grasp the relationship between a state of the weft yarn Y located between the tandem nozzle 23 and the main nozzle 21 at the timing before the weft yarn Y is discharged from the main nozzle 21 during the nth instance of the weaving operation, and a state of the leading end of the weft yarn Y at the timing when the weft yarn Y is discharged from the main nozzle 21 during the nth instance of the weaving operation.

The management device 41 may associate the first related data Da, which is one of the pieces of the captured image data D1 from the first camera 31a, with the second related data Db, which is one of the pieces of the captured image data D2 from the second camera 31b, captured during an instance of the weaving operation different from the instance of the weaving operation in which the first related data Da is captured. In this case, the relationship among the plurality of locations in the loom 10 between two different instances of the weaving operation may be more easily grasped.

### Specific Example 1

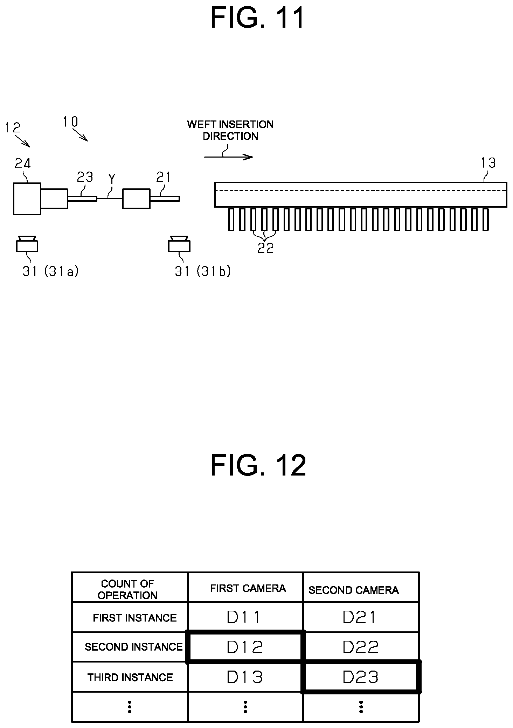

As illustrated in FIG. 11, the weft insertion device 12 includes a brake device (ABS: Automatic Brake System) 24. The brake device 24 is located upstream of the main nozzle 21 in the weft insertion direction, specifically, upstream of the tandem nozzle 23. The brake device 24 applies a brake to the weft yarn Y before the insertion of the weft yarn Y is completed.

The first camera 31a captures an image of the brake device 24 at the timing when the brake device 24 applies a brake to the weft yarn Y. The second camera 31b captures an image of the tip of the main nozzle 21 at the timing before the weft yarn Y is discharged. In FIG. 11, the loom 10 at the timing before the weft yarn Y is discharged from the main nozzle 21 is illustrated.

The management device 41 sets pieces of the captured image data D2, among the pieces of the captured image data D2 from the second camera 31b, captured during an instance of the weaving operation subsequent to an instance in which the first related data Da is captured, as the second related data Db.

As shown in FIG. 12, for example, if the captured image data D12 from the first camera 31a captured during the second instance of the weaving operation is the first related data Da, the captured image data D23 from the second camera 31b captured during the third instance of the weaving operation is the second related data Db.

According to this configuration, the relationship among the plurality of locations in the loom 10 between two consecutive instances of the weaving operation may be more easily grasped.

If the brake applied to the weft yarn Y by the brake device 24 during the (n-1)th instance of the weaving operation is insufficient, the weft yarn Y may project from the tip of the main nozzle 21 during the nth instance of the weaving operation. According to the above configuration, it is possible to grasp the relationship between the degree of a brake applied to the weft yarn Y during the(n-1)th instance of the weaving operation and the presence or absence of the weft yarn Y projecting from the tip of the main nozzle 21 before the weft yarn Y is discharged during the nth instance of the weaving operation. Therefore, if the weft yarn Y is projecting from the tip of the main nozzle 21, it is possible to determine whether projection of the weft yarn Y is caused by an insufficient brake applied to the weft yarn Y by the brake device 24.

### Specific Example 2

The weft insertion device 12 has four main nozzles 21. The types of weft yarn Y discharged from the main nozzles 21 are different from each other among the four main nozzles 21. The weft yarn Y is discharged from the four main nozzles 21 in a predetermined order. For example, the weft yarn Y is repeatedly discharged from the four main nozzles 21 in the order of a first main nozzle 21, a second main nozzle 21, a third main nozzle 21, and a fourth main nozzle 21. Therefore, the weft yarn Y is discharged from the first main nozzle 21 during the first, fifth, ninth, and subsequent instances of the weaving operation.

The management device 41 sets one of the pieces of the captured image data D2 from the second camera 31b, which is captured during an instance of the weaving operation that occurs after an instance of the weaving operation in which the first related data Da is captured, and during which the weft yarn Y is discharged using the same one of the plurality of main nozzles 21 as that used during the instance of the weaving operation in which the first related data Da is captured, as the second related data Db.

For example, in a case where the captured image data D1 from the first camera 31a captured during the first instance of the weaving operation is the first related data Da, the second related data Db is the captured image data D2 from the second camera 31b captured during the fifth instance of the weaving operation.

According to this configuration, the relationship among the plurality of locations in the loom 10 between two instances of the weaving operation in which the weft yarn Y is discharged from the same one of the main nozzles 21 may be more easily grasped.

The targets to be captured by the cameras 31 are not limited to those described in the above embodiment and the above modification.

Examples of the targets to be captured by the cameras 31 include a length measuring drum, a weft tension adjustment device, a weft stop pin, a weft feeler, and a catch cord. The weft tension adjustment device adjusts the tension of the weft yarn Y that has been inserted. The weft stop pin moves up and down to release or stop the weft yarn Y. The weft feeler detects the weft yarn Y that has reached the final arrival point P. The catch cord is formed of a plurality of warp yarns T that holds the leading end of the inserted weft yarn Y.

The image capturing timings of the cameras 31 during each instance of the weaving operation are not limited to those described in the above embodiment and the above modification. The image capturing timings of the cameras 31 during each instance of the weaving operation are set appropriately according to the targets to be captured by the camera 31.

The observation system 100 for the loom 10 may be applied to a loom other than an air jet loom, such as a water jet loom.

The management device 41 is not limited to a computer. The management device 41 may be formed of a control device of the loom 10, or an external server such as a cloud server.

The storage location for the associated captured image data D is not limited to the auxiliary storage device 42. The associated captured image data D may be stored in a memory provided in the loom 10 or in an external server such as a cloud server.

In the above embodiment, the operator grasps the relationship among the plurality of locations in the loom 10 by visually checking the associated captured image data D, but the computer may be used to grasp the relationship among the plurality of locations in the loom 10 by processing the associated captured image data D through image processing.

For example, the computer may perform big data analysis using the operating conditions of the loom 10 and the associated captured image data D. Specifically, the computer may estimate or identify a cause of abnormalities in the loom 10 using the operating conditions of the loom 10 and the associated captured image data D, or may analyze the trends of abnormalities in the loom 10.

## Claims

1. An observation system (100) for a loom (10) that repeatedly performs a weaving operation including beating, the observation system (100) comprising:
a plurality of cameras (31, 31a, 31b) configured to capture an image during each instance of the weaving operation; and
a management device (41) configured to obtain a plurality pieces of captured image data (D) from the plurality of cameras (31, 31a, 31b), **characterized in that**
the plurality of cameras (31, 31a, 31b) each have a different target to be captured and a different image capturing timing during each instance of the weaving operation, and
the management device (41) performs an image association process to associate related pieces of captured image data (D), among the plurality of pieces of captured image data (D) from the plurality of cameras (31, 31a, 31b) each having the different target to be captured and the different image capturing timing during each instance of the weaving operation.

2. The observation system (100) for the loom (10) according to claim 1, **characterized in that**
one instance of the weaving operation corresponds to a cycle from a start of the beating to a start of subsequent beating,
the plurality of cameras (31, 31a, 31b) includes a first camera (31a) and a second camera (31b), the second camera (31b) having the target to be captured and the image capturing timing that are different from the target to be captured and the image capturing timing of the first camera (31a), during each instance of the weaving operation, and
the management device (41) associates, in the image association process,
first related data (Da), which is one of a plurality of pieces of captured image data (D) from the first camera (31a), with
second related data (Db) which is one of a plurality of pieces of the captured image data (D) from the second camera (31b), the second related data (Db) being captured during a same instance of the weaving operation as an instance in which the first related data (Da) is captured.

3. The observation system (100) for the loom (10) according to claim 2, **characterized in that**
the loom (10) includes a weft insertion device (12) for inserting a weft yarn (Y) and a cutting member (14) for cutting the weft yarn (Y) which has been inserted,
the weft insertion device (12) includes a main nozzle (21) from which the weft yarn (Y) is discharged,
the first camera (31a) captures an image of the cutting member (14) at a timing when the cutting member (14) cuts the weft yarn (Y) which has been inserted, and
the second camera (31b) captures an image of a tip of the main nozzle (21) at a timing before the weft yarn (Y) is discharged from the main nozzle (21).

4. The observation system (100) for the loom (10) according to claim 2, **characterized in that**
the loom (10) includes a weft insertion device (12) for inserting the weft yarn (Y),
the weft insertion device (12) includes a main nozzle (21) from which the weft yarn (Y) is discharged and a plurality of sub-nozzles (22) that is disposed downstream of the main nozzle (21) in a weft insertion direction in which the weft yarn (Y) is inserted,
the first camera (31a) captures an image of a leading end of the weft yarn (Y) at a timing when the weft yarn (Y) is discharged from the main nozzle (21), and
the second camera (31b) captures an image of the weft yarn (Y) at a final arrival point downstream of the plurality of sub-nozzles (22) in the weft insertion direction at a timing when the weft yarn (Y) reaches the final arrival point.

5. The observation system (100) for the loom (10) according to claim 2, **characterized in that**
the loom (10) includes a weft insertion device (12) for inserting the weft yarn (Y),
the weft insertion device (12) includes a main nozzle (21) from which the weft yarn (Y) is discharged, and a tandem nozzle (23) that is disposed upstream of the main nozzle (21) in a weft insertion direction in which the weft yarn (Y) is inserted,
the first camera (31a) captures an image of the weft yarn (Y) located between the tandem nozzle (23) and the main nozzle (21) at a timing before the weft yarn (Y) is discharged from the main nozzle (21), and
the second camera (31b) captures an image of a leading end of the weft yarn (Y) at a timing when the weft yarn (Y) is discharged from the main nozzle (21).

6. The observation system (100) for the loom (10) according to claim 1, **characterized in that**
one instance of the weaving operation corresponds to a cycle from a start of the beating to a start of subsequent beating,
the plurality of cameras (31, 31a, 31b) includes a first camera (31a) and a second camera (31b), the second camera (31b) having the target to be captured and the image capturing timing that are different from the target to be captured and the image capturing timing of the first camera (31a), during each instance of the weaving operation, and
the management device (41) associates, in the image association process,
first related data (Da) which is one of a plurality of pieces of captured image data (D) from the first camera (31a), with
second related data (Db) which is one of a plurality of pieces of captured image data (D) from the second camera (31b), the second related data (Db) being captured during an instance of the weaving operation different from an instance of the weaving operation in which the first related data (Da) is captured.

7. The observation system (100) for the loom (10) according to claim 6, **characterized in that**
the second related data (Db), which is one of the plurality of pieces of the captured image data (D) from the second camera (31b), is captured during an instance of the weaving operation subsequent to the instance in which the first related data (Da) is captured.

8. The observation system (100) for the loom (10) according to claim 7, **characterized in that**
the loom (10) includes a weft insertion device (12) for inserting the weft yarn (Y),
the weft insertion device (12) includes a main nozzle (21) from which the weft yarn (Y) is discharged and a brake device (24) that is disposed upstream of the main nozzle (21) in a weft insertion direction in which the weft yarn (Y) is inserted, the brake device (24) applying a brake to the weft yarn (Y) before insertion of the weft yarn (Y) is completed,
the first camera (31a) captures an image of the brake device (24) at a timing when the brake device (24) applies a brake to the weft yarn (Y), and
the second camera (31b) captures an image of a tip of the main nozzle (21) at a timing before the weft yarn (Y) is discharged from the main nozzle (21).

9. The observation system (100) for the loom (10) according to claim 6, **characterized in that**
the loom (10) includes a weft insertion device (12) for inserting the weft yarn (Y),
the weft insertion device (12) has a plurality of main nozzles (21) from which the weft yarn (Y) is discharged in a predetermined order,
the second related data (Db), which is one of the plurality of pieces of captured image data (D) from the second camera (31b), is captured during the instance of the weaving operation that occurs after the instance of the weaving operation in which the first related data (Da) is captured, and during which the weft yarn (Y) is discharged using a same one of the plurality of main nozzles (21) as one of the plurality of main nozzles (21) used during the instance of the weaving operation in which the first related data (Da) is captured.

10. The observation system (100) for the loom (10) according to any one of claims 1 through 9, further comprising
the number of lights (32) equal to the number of the cameras (31, 31a, 31b), **characterized in that**
the lights (32) illuminate the targets to be captured by the cameras (31, 31a, 31b).
